# EUROPÄISCHE PATENTSCHRIFT

(11) **EP 3 883 808 B1**
(45) Veröffentlichungstag und Bekanntmachung des Hinweises auf die Patenterteilung: **07.06.2023**
(21) Anmeldenummer: 20811283.9
(22) Anmeldetag: 20.11.2020
(51) Int. Cl.: B60L 5/22, B60L 9/00, B60L 5/08, B60L 5/12, B60L 5/18, B60L 5/38, B60L 5/40, B60M 1/30

(54) **STROMABNEHMER UND SCHLEIFLEITUNGSSYSTEM**
CURRENT COLLECTOR AND CONTACT LINE SYSTEM
COLLECTEUR DE COURANT ET SYSTÈME DE LIGNE DE CONTACT

(30) Priorität: 30.11.2019 DE 102019132567
(43) Veröffentlichungstag der Anmeldung: 29.09.2021
(73) Patentinhaber: Conductix-Wampfler GmbH, 79576 Weil am Rhein (DE)
(72) Erfinder: HAGIN, Moritz, 79576 Weil am Rhein (DE); WENK, Matthias, 79588 Efringen-Kirchen (DE)
(74) Vertreter: Charrier Rapp & Liebau
(86) Internationale Anmeldenummer: PCT/EP2020/082852
(87) Internationale Veröffentlichungsnummer: WO 2021/105018

(56) Entgegenhaltungen:
- EP-A1- 3 495 190
- CN-A- 108 725 218
- CN-U- 201 872 623
- DE-A1-102017 215 338
- GB-A- 335 263
- US-A1- 2019 001 823

## Beschreibung

Die Erfindung betrifft einen Stromabnehmer nach dem Oberbegriff des Anspruchs 1 sowie ein Schleifleitungssystem nach dem Oberbegriff des Anspruchs 12.

Im Bereich der Schleifleitungssysteme nehmen Anwendungen zu, bei denen Stromabnehmer mit ihren Schleifkontakten sehr oft in die Schleifleitung einfahren und wieder ausfahren müssen. Auch die Fahrgeschwindigkeiten der elektrischen Verbraucher, die von den Stromabnehmern über die Schleifleitung mit elektrischer Energie und/oder Daten versorgt, steigen an. Damit wird es immer wichtiger, das Ein- und Ausfahren der Schleifkontakte in die Schleifleitung an diese häufigen Wechsel und höheren Geschwindigkeiten anzupassen. Hierbei sind die beiden beispielsweise aus der DE 20 2015 100 622 U1 bekannten Stromabnehmern verwendeten Federarme, mit denen die Schleifkontakte in Richtung der Schleifleitung gehalten und kontinuierlich angedrückt werden, aus unterschiedlichen Gründen nachteilig. So sind diese Stromabnehmer und ihre Federarmen oft relativ lange und haben mehrere Freiheitsgrade für unterschiedliche Bewegungsrichtungen. Dies erfordert beim Einfahren des Schleifkontakts in die Schleifleitung einen Einfahrtrichter, wobei dabei das in Einfahrrichtung vordere Ende des Schleifkontakts dann relativ stark an dem Einfahrtrichter anfährt, was zu einer erhöhten Belastung des Federarms und des Schleifkontakts führt und somit ungünstig für die Lebensdauer ist. Auch besteht die Gefahr, dass der Schleifkontakt unsauber eingefahren wird und beim anschließenden Verfahren in der Schleifleitung dann nicht sauber in das Leitungsprofil eingeführt ist.

Ein weiterer Nachteil der bekannten Stromabnehmer mit Federarmen ist, dass bei ausgefedertem Schleifkontakt, also in ganz ausgefahrenem Zustand des Federarms, der ja standardmäßig vom Stromabnehmer weg zur Schleifleitung hin gedrückt wird, aufgrund des dann langen Federarms und dem an seinem Ende angebrachten, weitgehend frei schwingendem Schleifkontakt starke Vibrationen auftreten können. Auch diese erhöhen den Verschleiß des Federarms.

Die DE 23 52 102 A1 offenbart ein Stromübertragungssystem für trassengeführte Fahrzeuge mit aus mehreren an der Fahrbahn montierten Stromschienen mit zueinander parallelen und auf dieselbe Seite der Schienenanordnung weisenden Schleifflächen und aus einem mit dem Fahrzeug verbundenen und von der Schienenanordnung abhebbaren Kontaktträger mit auf den Stromschienen schleifenden, voneinander getrennten Kontaktstücken. Dabei liegen die Schleifflächen der Stromschienen in mindestens zwei Ebenen und der Kontaktträger ist in einer schienenparallelen Achse verschwenkbar gelagert ist, welche die Schwerelinie der Mittellinien der Schleifflächen darstellt. Hierdurch soll sich eine in hohem Maße gleichmäßige Aufteilung der Gesamtanpresskraft auf alle voneinander getrennten Kontaktstücke ergeben.

Die GB 335263 A offenbart Stromkollektoren, wie sie in elektrischen Eisenbahnwaggons verwendet werden, mit einem Verbindungsschuh mit einer Kontaktdruck-Steuerfeder, die den Verbindungsschuh an die Stromschiene andrückt, wobei die Kontaktdruck-Steuerfeder auf eine sehr kleine Gesamthöhe zusammengedrückt werden kann. Dabei sind ein Paar von Verbindungshebeln über Gelenkstifte drehbar an einem Rahmen aufgehängt. Weiter weist der Verbindungsschuh an gegenüberliegenden Enden jeweils einen Stift auf, welcher in an den Verbindungshebeln angeordneten Langlöcher eingreift.

Die WO 2020/029713 A1 offenbart ein Elektrofahrzeug mit einem Stromabnehmer für Kontakte und besteht aus einer Kontaktschleifplatte, welche über zwei gemeinsam Federkraftbeaufschlagte und über eine Hebelanordnung verbundene gekrümmte Pleuelstangen am Fahrzeug angeordnet ist. Dabei ist eine der Pleuelstangen direkt und die andere Pleuelstange über einen Gelenkhebel mit der Kontaktschleifplatte verbunden. Ausweichbewegungen der beiden Pleuelstangen sind aufgrund ihrer Kopplung untereinander stets voneinander abhängig. Die US 2019/001823 A1 offenbart einen Schleifkontaktschuh für ein elektrisches Schienenfahrzeug, mit einem Schleifkontakt, der mittels eines Aktuators zwischen einer ein- und ausgefahrenen Position an einer elektrischen Stromschiene verfahrbar ist, wobei eine Hebelanordnung den Schleifkontakt mit dem Aktor verbindet. Dabei hat der Aktor eine solche Bewegungsgeschwindigkeit, dass er den Schleifkontakt innerhalb einer Sekunde oder weniger zwischen ein- und ausgefahrener Position bewegen kann und seine Anzahl von Betriebszyklen bis zum Ausfall größer als oder gleich 2.500.000 ist.

Die EP 3 495 190 A1 offenbart einen Stromabnehmer zur Versorgung eines längs einer Schleifleitung in deren Längsrichtung verfahrbaren elektrischen Verbrauchers, mit einer Halterung und einem gegenüber der Halterung in eine Zustellrichtung von und zur Schleifleitung beweglichen, in einem Schleifkontaktträger angeordneter Schleifkontakt, sowie ein Schleifleitungssystem mit einer Schleifleitung und mindestens einem an der Schleifleitung in deren Längsrichtung verfahrbaren Stromabnehmer mit mindestens einem Schleifkontakt zur Kontaktierung mit mindestens einem elektrischen leitenden Leiterprofil der Schleifleitung zur Versorgung eines längs der Schleifleitung verfahrbaren elektrischen Verbrauchers, wobei der Schleifkontakt in eine Zustellrichtung von und zur Schleifleitung beweglich ist. Dabei ist bei dem Stromabnehmer der Schleifkontakt zusätzlich in eine im wesentlichen quer zur Längsrichtung verlaufende Querrichtung beweglich ist, wobei zwischen Schleifkontakt und Halterung ein Federelement vorgesehen ist, sowie durch ein Schleifleitungssystem mit einem solchen Stromabnehmer.

Die DE 10 2017 215 338 A1 offenbart ein Verfahren zur Überprüfung einer Kontaktierung eines Stromabnehmers eines bevorzugt nicht schienengebundenen elektromotorisch angetriebenen Fahrzeuges mit einem Fahrdraht einer sich in eine Fahrtrichtung erstreckenden Oberleitung, wobei der Stromabnehmer in und entgegen einer Vertikalrichtung verfahrbar ist und ein Trägerelement sowie eine mit einem Federelement an dem Trägerelement federnd gelagerte Schleifleiste zur Kontaktierung mit dem Fahrdraht aufweist, wobei der Stromabnehmer eine Sensoreinheit aufweist und bei einer Kontaktierung der Schleifleiste mit dem Fahrdraht die Schleifleiste entgegen der Vertikalrichtung aus einer Ruheposition relativ zum Trägerelement ausgelenkt wird, wobei die Auslenkung von der Sensoreinheit erfasst wird und in Abhängigkeit der Auslenkung eine Auswertung erfolgt, ob die Schleifleiste mit dem Fahrdraht kontaktiert ist.

Die CN 201872623 U offenbart einen seitlichen Stromabnehmer, der ein Gehäuse, einen Auslösemechanismus, einen Schwenkmechanismus, einen Gleitmechanismus und einen Verbindungsanschluss umfasst. Der Schwenkmechanismus ist eine Vierstangenverbindung, die aus einer Hauptschwinge, einer Nebenschwinge, einem Adapter und einem Schwingenträger besteht und mit einer Zugfeder versehen ist. Ein Gleiter des Gleitmechanismus steht in Gleitkontakt mit einer Stromschiene. Der Freigabemechanismus umfasst einen pneumatischen und einen manuellen Mechanismus. Die Vierstangenverbindung ist ein Nicht-Parallelogramm-Mechanismus.

Die CN 108725218 A offenbart ein Elektromobil und eine Fahrbahnoberflächenkontakt-Energieversorgungsvorrichtung mit einem Stromabnehmer zum Empfangen von elektrischem Strom von der Fahrbahnoberflächenkontakt-Energieversorgungsvorrichtung. Der Stromabnehmer ist am unteren Abschnitt des Elektromobils installiert und umfasst eine Berührungsgleitplatte, eine erste Kurbelverbindungsstange und eine zweite Kurbelverbindungsstange und ist dadurch gekennzeichnet, dass auf der Berührungsgleitplatte starke Magnetstücke montiert sind. Die Fahrbahnoberflächenkontakt-Energieversorgungsvorrichtung ist mit einem Kabel, Kontakten, Druckfedern, einer elastischen Dichtungspatrone, einem Dichtungsrohr, einer Dichtungshaube, einem beweglichen Kontakt und einem festen Kontakt versehen und ist dadurch gekennzeichnet, dass das obere Ende des beweglichen Kontakts mit einem Kragen aus ferromagnetischem Material verbunden ist und das obere Ende des Kragens nahe der oberen Oberfläche des beweglichen Kontakts ist. Aufgabe der Erfindung ist es deshalb, einen Stromabnehmer sowie ein Schleifleitungssystem bereitzustellen, welche die oben genannten Nachteile überwinden und eine möglichst kompakte und schwingungsunempfindliche Ausgestaltung des Stromabnehmers bereitstellen.

Die Erfindung löst diese Aufgabe durch einen Stromabnehmer mit den Merkmalen des Anspruchs 1 sowie ein Schleifleitungssystem mit den Merkmalen des Anspruchs 12, Vorteilhafte Weiterbildungen und Ausgestaltungen der Erfindung sind in den Unteransprüchen angegeben.

Erfindungsgemäß ist ein eingangs genannter Stromabnehmer dadurch gekennzeichnet, dass , jede der Gelenkhebelanordnungen jeweils einen an dem Befestigungselement drehbar angelenkten Gelenkhebel und einen einerseits drehbar an dem Gelenkhebel und andererseits drehbar an dem Schleifkontakt angeordneten Hebelarm aufweist.

Unter im wesentlichen parallel wird hier und im nachfolgenden keine mathematisch exakte Parallelität verstanden, sondern auch geringfügige Abweichungen von der Parallelität um wenige Winkelgrade, welche z.B. durch Abnutzungserscheinungen, Witterungseinflüsse, Temperatureinflüsse, produktionstechnische Ungenauigkeiten und Toleranzen, nicht exakt geradlinig verlaufende oder montierte Schleifleitungen oder auch aus andere Gründe entstehen können.

Dabei sind die Hebelarme vorteilhaft in Form von Winkelhebeln ausgebildet, und/oder die Rückstellvorrichtung verbindet die zwei Hebelarme elastisch, insbesondere federelastisch mit dem Befestigungselement. Hierfür können anstelle der in den Zeichnungen gezeigten und nachfolgend im Detail beschriebenen Spiralfedern auch andere elastische, insbesondere federeleastische Elemente verwendet werden, beispielsweise elastische Gummipuffer, Pneumatikzylinder etc.

Die Rückstellvorrichtung weist eine elastische Zug-Druck-Anordnung mit einem ersten Zug-Druck-Bereich und einem zweiten Zug-Druck-Bereich auf, wobei der erste Zug-Druck-Bereich einerseits mit dem Hebelarm der ersten Gelenkhebelanordnungen und andererseits mit dem Befestigungselement verbunden ist, und der zweite Zug-Druck-Bereich einerseits mit dem Hebelarm der zweiten Gelenkhebelanordnungen und andererseits mit dem Befestigungselement verbunden ist. Anstelle der in den Zeichnungen gezeigten und nachfolgend im Detail beschriebenen Spiralfedern können zur Realisierung der Zug-DruckBereiche der Zug-Druckanordnung auch andere Arten von dem Fachmann geläufigen Zug-Druck-Elementen verwendet werden, beispielsweise elastische Gummipuffer, Pneumatikzylinder etc. Dabei kann die Zug-Druck-Anordnung vorteilhaft ein erstes Zug-Druck-Element zur Ausbildung des ersten Zug-Druck-Bereichs und ein davon getrenntes zweites Zug-Druck-element zur Ausbildung des zweiten Zug-Druck-Bereichs aufweist. Auch kann die Zug-Druck-Anordnung Dabei kann vorteilhaft ein einzelnes Zug-Druck-Eelement aufweist, welches zur Ausbildung des ersten Zug-Druck-Bereichs und des zweiten Zug-Druck-Bereichs zwischen den beiden Zug-Druck-Bereichen an dem Befestigungselement angeordnet ist. Bevorzugt können dabei der erste Zug-Druck-Bereich und/oder der zweite Zug-Druck-Bereich parallel zur Längsrichtung ausgerichtet sein. Insbesondere kann der erste Zug-Druck-Bereich und/oder der zweite Zug-Druck-Bereich in einem Winkelabstand zur Längsrichtung, bevorzugt von maximal 45°, besonders bevorzugt von maximal 15° zur Längsrichtung ausgerichtet sein. In einer vorteilhaften Ausgestaltung kann das Zug-Druck-Element eine Federanordnung und der erste Zug-Druck-Bereich ein erster Federbereich und der zweite Zug-Druck-Bereich ein zweiter Federbereich sein.

In einer weiteren vorteilhaften Ergänzung kann Rückstellvorrichtung ein Dämpfungselement aufweisen.

Bevorzugt können eine oder mehrere Drehachsen, um welche Teile der Gelenkhebelanordnung, insbesondere die Gelenkhebel und die Hebelarme, drehbar sind, senkrecht auf der Zustellebene stehen. Auch können eine oder mehrere Drehachsen, um welche Teile der Gelenkhebelanordnung drehbar sind, gegenüber einem Lot auf die Zustellebene geneigt sein, bevorzugt um einen Winkelabstand zum Lot von maximal 20°, besonders bevorzugt von maximal 5°. Bevorzugt kann die Zustellebene durch die Längsrichtung und eine senkrecht zur Längsrichtung verlaufende Zustellrichtung des Schleifkontakts von und zu der Schleifleitung aufgespannt sein.

Vorteilhaft kann der Schleifkontakt elektrische isoliert am Stromabnehmer angeordnet sein. Weiter können auch mehrere, bevorzugt in Längsrichtung bündig nebeneinander angeordneten Schleifkontakte mit jeweils eigener Gelenkhebelanordnung und Rückstellvorrichtung am Stromabnehmer angeordnet sein.

Erfindungsgemäß ist ein eingangs genanntes Schleifleitungssystem dadurch gekennzeichnet, dass der Stromabnehmer wie oben und nachfolgend beschrieben ausgebildet ist.

Die Erfindung wird nachfolgend anhand von detaillierten Ausführungsbeispielen mit Bezug auf die begleitenden Zeichnungen beschrieben. Diese zeigen:
- **Fig. 1**: eine dreidimensionale Schrägansicht eines erfindungsgemäßen Stromabnehmers;
- **Fig. 2**: eine Frontansicht eines erfindungsgemäßen Schleifleitungssystems mit dem Stromabnehmer aus Fig. 1 vor dem Einfahren in eine Schleifleitung;
- **Fig. 3**: die Frontansicht aus Fig. 2 mit dem Stromabnehmer aus Fig. 1 während des Einfahrens in die Schleifleitung.

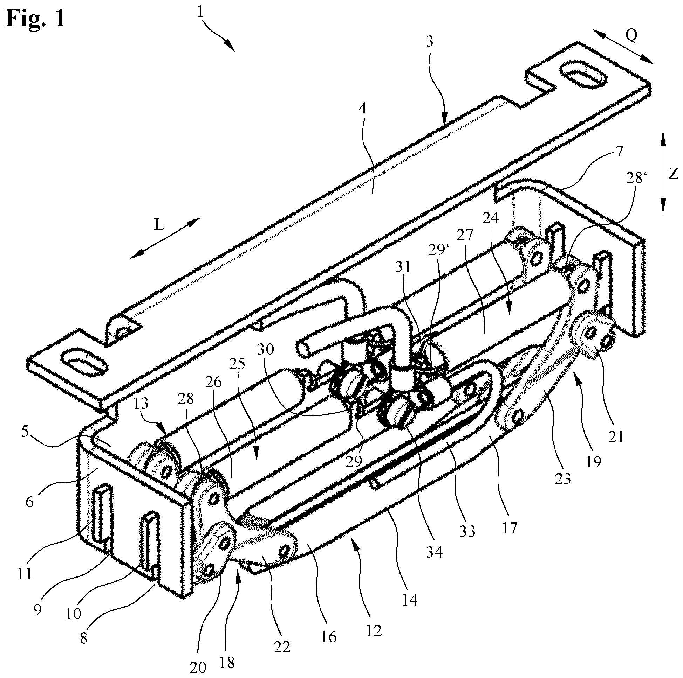

Fig. 1 zeigt eine dreidimensionale Schrägansicht eines erfindungsgemäßen Stromabnehmers 1 zur Versorgung eines elektrischen Verbrauchers 2 mit elektrischer Energie und/oder Daten. Der Stromabnehmer 1 weist einen als Befestigungsrahmen 3 auf, der über eine Befestigungsplatte 4 an den elektrischen Verbraucher 2 angeschraubt wird. An die Befestigungsplatte 4 schließt sich eine etwa rechtwinklig nach unten gebogene Halteplatte 5 an, welche in ihrem unteren Bereich wiederum zwei in etwa rechtwinklig U-förmig abgebogene Halteschenkel 6, 7 aufweist. Der Halteschenkel 6 weist zwei in den Zeichnungen von unten zugängliche Einsteckschlitze 8, 9 auf. Entsprechende, nicht bezeichnete Einsteckschlitze sind auch an dem anderen Halteschenkel 7 angeordnet.

In die Einsteckschlitze 8, 9 und die jeweils gegenüberliegenden Einsteckschlitze des in den Zeichnungen rechten Halteschenkels 7 sind von in den Zeichnungen unten die gegenüberliegenden Enden von Tragplatten 10, 11 eingesteckt. Die Tragplatten weisen hierzu ebenfalls nicht näher bezeichnete, nach oben offene Einsteckschlitze auf, welche mit den Einsteckschlitzen 8, 9 der Halteplatte 5 in an sich bekannter Weise zusammenwirken.

Jede der Tragplatten 10, 11 trägt jeweils identische ausgebildete Schleifkontaktanordnungen 12 bzw. 13. Die Erfindung wird deshalb nachfolgend anhand der in den Zeichnungen vorderen Schleifkontaktanordnung 12 erläutert. Entsprechende Angaben und Ausführungen gelten auch für die Schleifkontaktanordnung 13.

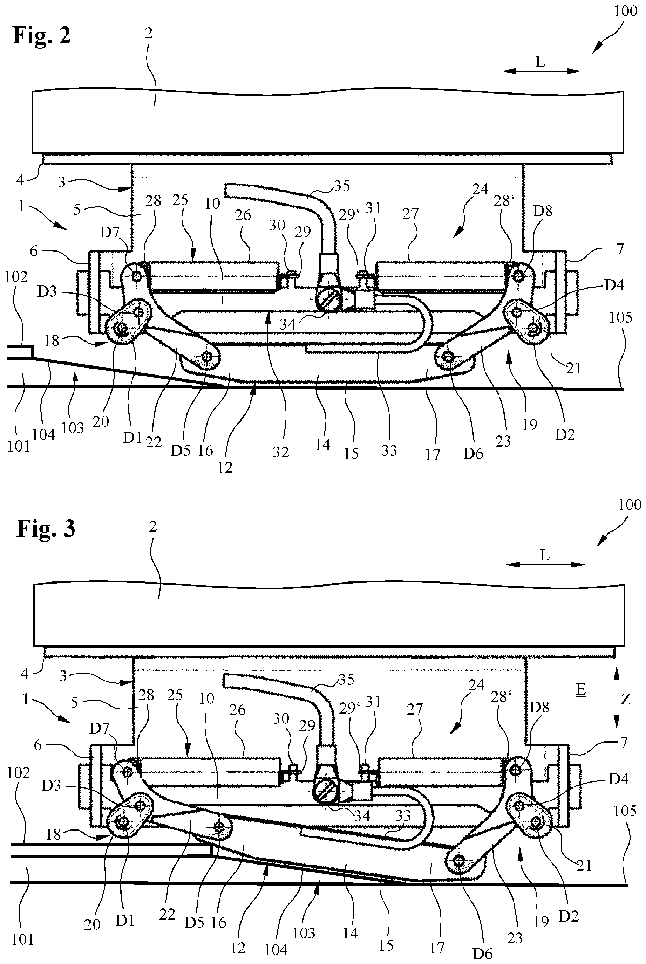

Die Schleifkontaktanordnung 12 weist einen länglichen Schleifkontakt 14 mit einer in eine Zustellrichtung Z des Schleifkontakts 14 von der Befestigungsplatte 4 nach unten weisenden Schleifkontaktfläche 15 auf. Die Schleifkontaktfläche 15 dient in an sich bekannter Weise zur elektrischen Kontaktierung eines in eine Längsrichtung L verlaufenden elektrischen Leitungsprofils 102 einer Schleifleitung 101 eines an sich bekannten Schleifleitungssystems 100 und verläuft hierzu in der in Fig. 1 und 2 gezeigten Ruhestellung im wesentlichen parallel zur Längsrichtung L. Die Längsrichtung L entspricht auch der Bewegungsrichtung des Stromabnehmers 1 längs der Schleifleitung 101, welcher in Zustellrichtung in der Regel in gleichbleibendem Abstand von der Schleifleitung 101 bleibt. Unter im wesentlichen parallel wird hier neben einer exakten mathematischen Parallelität auch geringfügige Abweichungen um wenige Grade verstanden, welche z.B. durch Abnutzung der Schleifkontaktfläche 15, produktionstechnische Ungenauigkeiten, verbogenen oder nicht ganz exakte montierte Schleifleitungen 101 oder auch durch andere Gründe entstehen können.

Der Schleifkontakt 14 weist an seinem in Längsrichtung L vorderen bzw. hinteren Ende Befestigungsbereiche 16 bzw. 17 auf, welche grundsätzlich auch bereits in der Mitte des Schleifkontakts 14 beginnen können. Vorteilhaft können die Befestigungsbereiche 16 bzw. 17 aber an den in Längsrichtung L gegenüberliegenden Enden des Schleifkontakts 14 vorgesehen sein.

Um im Energieübertragungsmodus, also wenn der Schleifkontakt 14 in das Leitungsprofil 102 eingefahren ist und dieses elektrische kontaktiert, eine sichere und zuverlässige elektrische Kontaktierung zu gewährleisten, wird der Schleifkontakt 14 stets mit Federkraft in Zustellrichtung Z zur Schleifleitung 101 hin und von dem Befestigungsrahmen 3 weg gedrückt, wie nachfolgend im Detail beschrieben. Trotzdem soll der Schleifkontakt 14 aber beim Einfahren in das Leitungsprofil 102 in einer durch die Zustellrichtung Z und die Längsrichtung L aufgespannten Zustellebene E bewegbar sein und ausweichen können, wie in Fig. 3 gezeigt.

Hierzu ist der Schleifkontakt 14 mittels zweier im wesentlichen identisch ausgebildeten, aber spiegelbildlich angeordneten Gelenkhebelanordnungen 18, 19 an der Tragplatte 10 drehbar angelenkt. Es wird deshalb nachfolgend vor allem die in den Zeichnungen linke Gelenkhebelanordnung 18 beschrieben, entsprechende Ausführungen gelten seitenverkehrt auch für die rechte Gelenkhebelanordnung 19.

Die Gelenkhebelanordnung 18 weist einen vorliegenden aus zwei parallel angeordneten Teilen ausgebildeten Gelenkhebel 20 auf, welcher um eine Drehachse D1 drehbar an der Tragplatte 10 angelenkt ist. Die Drehachse D1 steht dabei senkrecht auf der Zustellebene E. Dabei umgreifen die parallelen Teile des Gelenkhebels 20 die Tragplatte 10, und die Drehachse D1 reicht durch die beiden Teile mit dazwischenliegender Tragplatte 10. Der Gelenkhebel 20 kann aber auch auf andere Art und Weise ausgebildet sein, beispielsweise durch nur einen einseitigen Gelenkhebel. Die hier beschriebene Ausgestaltung hat den Vorteil der symmetrischen Anordnung der beiden Teile rechts und links der Tragplatte 10, was für eine gleichmäßige Belastung der Drehachse D1 sorgt.

An dem Gelenkhebel 20 ist um eine beabstandet von der Drehachse D1 befindliche Drehachse D3 ein Hebelarm 22 drehbar angeordnet. Der Hebelarm 22 ist vorliegend als Winkelhebelarm mit einem kürzeren und einem längeren Arm ausgebildet, welche in einem Winkel ungleich 180° zueinander verlaufen. Bevorzugt kann der Winkel ein flacher Winkel sein, im vorliegenden Ausführungsbeispiel etwa 160°. Dabei ist die Drehachse D3 vorliegend im Bereich an der Spitze des zwischen kürzerem und längerem Arm des Hebelarms 22 gebildeten Winkels lokalisiert, wobei die Spitze auf den Gelenkhebel 20 zeigt, während die Enden der Arme des Hebelarms 22 von dem Gelenkhebel 20 weg zeigen. Auch die Drehachse D3 steht senkrecht auf der Zustellebene E.

Der Hebelarm 22 ist einerseits mit seinem längeren Arm um eine Drehachse D5 im Befestigungsbereich 16 des Schleifkontakt 14 drehbar angelenkt. Andererseits ist der Hebelarm 22 mit seinem kürzeren Arm um eine Drehachse D7 drehbar an einer Rückstellvorrichtung 24 angeordnet. Auch die Drehachsen D3 und D5 stehen senkrecht auf der Zustellebene E. Das oben festgestellte gilt entsprechend auch für die Drehachsen D2, D4, D6 und D8 der zweiten, entsprechend ausgebildeten Gelenkhebelanordnung 19.

Die Rückstellvorrichtung 24 weist eine Federanordnung 25 auf, welche vorliegend eine erste Rückstellfeder 26 und eine davon getrennt zweite Rückstellfeder 27 vorsieht. Die Rückstellfeder 26 ist mit einer in den Zeichnungen linken Federöse 28 an der Drehachse D7 drehbar angeordnet, und zum anderen mit ihrer in den Zeichnungen rechten Federöse 29 an einem Haltedorn 30 der Tragplatte 10 befestigt. Die Rückstellfeder 26 ist dabei in der in Fig. 1 und 2 gezeigten Ausgestaltung bevorzugt entspannt, um im Zusammenspiel mit der entsprechend ausgebildeten und an dem Haltedorn 31 befestigten zweiten, ebenfalls bevorzugt entspannten Rückstellfeder 27 der Gelenkhebelanordnung 19 den Schleifkontakt 14 in der in Fig. 1 und 2 gezeigten Ruhestellung zu halten. Alternativ können die Rückstellfedern 26, 27 in einem generellen Gedanken der Erfindung bevorzugt auch gleichsinnig auf Zug oder Druck vorgespannt sein, beispielsweise beide auf Zug, um bereits in der Ruhestellung stets eine Kraft auf den Schleifkontakt 14 in Zustellrichtung Z zur Schleifleitung 101 hin und vom Befestigungsrahmen 3 weg auszuüben und bei einer nur kurz auftretenden Auslenkung des Schleifkontakts 14 aus der Ruhstellung in Zustellrichtung Z von der Schleifleitung 101 weg und zum Befestigungsrahmen 3 hin den Schleifkontakt 14 zusätzlich zur Schleifleitung 101 hin zu drücken.

Anstelle der hier gezeigten und beschriebenen Spiralfedern 26, 27 können in einem allgemeinen Aspekt der Erfindung auch andere Arten von Zug-Druck-Elementen, beispielsweise elastische Gummipuffer, Pneumatikzylinder etc. verwendet werden.

Denn bei einer in Fig. 3 beispielhaft gezeigten Auslenkung des Schleifkontakts 14 aus seiner in Fig. 1 und 2 gezeigten Ruhestellung wird der linke Hebelarm 22 u.a. gegen den Uhrzeigersinn um die Drehachse D3 gedreht, so dass die erste Rückstellfeder 26 auseinandergezogen wird und sich spannt und eine Zugkraft in Richtung des Haltedorns 30 entwickelt. Der rechte Hebelarm 23 hingegen wird durch den Schleifkontakt 14 nach rechts gedrückt, so dass er sich ebenfalls gegen den Uhrzeigersinn um die Drehachse D4 dreht und somit die zweite Rückstellfeder 27 zusammendrückt, welche somit eine Druckkraft vom Haltedorn 31 weg nach rechts ausübt.

Die kurzen, drehbar an der Tragplatte 10 des Befestigungsrahmens 3 angeordneten Gelenkhebel 20, 21 ermöglichen dabei ein besseres Ausweichen des Schleifkontakts 14, nicht nur in Längsrichtung L, sondern auch in Zustellrichtung Z.

Die durch eine Auslenkung des Schleifkontakts 14 aus der Ruhestellung erzeugten Rückstellkräfte der Rückstellfedern 27 sorgen dann dafür, dass der Schleifkontakt 14 wieder in die Ruhestellung bewegt wird, sobald der Grund für die Auslenkung entfällt. Fährt der Schleifkontakt 14 vollständig in das Leitungsprofil 102 ein, also in die Betriebsstellung zur elektrischen Energieübertragung, so sorgen die Gelenkhebelanordnungen 18, 19 dafür, dass in beiden Rückstellfedern 26, 27 eine gleich große Rückstellkraft erzeugt wird, welche den Schleifkontakt 14 und insbesondere die Schleifkontaktfläche 15 gleichmäßig an das Leitungsprofil 102 drückt und somit für eine zuverlässige und gute elektrische Kontaktierung sorgt.

Anstelle der oben beschriebenen und in den Zeichnungen dargestellten zweiteiligen Federanordnung 25 mit voneinander getrennten Rückstellfedern 26, 27 kann die Federanordnung aber auch aus nur einem Federelement bestehen, welches beispielsweise zwischen den beiden Drehachsen D7 und D8 gespannt ist, und zusätzlich dann in seiner Mitte oder an zwei den Haltedornen 30, 31 entsprechenden Stellen befestig an der Tragplatte 10 befestigt ist und hierdurch einen ersten Federbereich zum ersten Hebelarm 22 und einen davon getrennten zweiten Federbereich zum zweiten Hebelarm 23 ausbildet. Auch hierdurch kann dann aufgrund der durch die Auslenkung des Schleifkontakts 14 aus der Ruhestellung erzeugten, in entgegengesetzte Richtungen wirkenden Rückstellkräften der beiden Federbereiche der Schleifkontakt 14 wieder in die Ruhestellung bewegt werden, sobald der Grund für die Auslenkung entfällt.

Vorteilhaft sind im vorliegenden Ausführungsbeispiel die Rückstellfedern 26, 27 oder in der oben beschriebenen Alternative die Federanordnung mit den beiden Federbereichen parallel oder weitegehend parallel zur Längsrichtung ausgerichtet. Hierdurch baut Schleifkontaktanordnung in Zustellrichtung niedriger und kompakter. In alternativen Ausführungen kann die Federanordnung aber auch anders ausgerichtet sein, beispielsweise könnten die Rückstellfedern 26, 27 schräg nach oben verlaufen und in einem Bereich in Längsrichtung L zwischen den beiden maximal nach innen gerichteten Stellungen der Drehachsen D7, D8 angeordnet sein, um noch Zug bzw. Druck auf die Hebelarme 22, 23 ausüben zu können.

In einer alternativen Ausgestaltung kann der Hebelarm 22 aber auch anders ausgebildet sein, z.B. als gerader Hebelarm mit gleich langen Armen. Auch kann die Anordnung der Drehachsen anders gewählt sein, beispielsweise kann der Gelenkhebel 20 um die Drehachse D7 am kürzeren Arm des Hebelarms 22 angelenkt werden, und die Rückstellfeder 26 kann dann im Bereich zwischen dieser Drehachse D7 und der am längeren Arm des Hebelarms 22 angeordneten Drehachse D5 am Hebelarm angreifen. Die Anordnung der Rückstellfeder 26 und des Gelenkhebels 20 ist dann in Zustellrichtung Z vertauscht. Auch andere Ausgestaltungen wird der Fachmann finden.

Maßgeblich ist, dass die Gelenkhebelanordnungen 18, 19 im Zusammenspiel mit der Rückstellvorrichtung 24 sicherstellt, dass der Schleifkontakt 14 in einem unbelasteten Zustand einerseits in eine Ruhestellung mit der Schleifkontaktfläche 15 im wesentlichen parallel zur Längsrichtung L bewegt wird, und andererseits zum Einfahren in die Schleifleitung 101 aus dieser Ruhestellung möglichst gut auf beiden Seiten geführt herausbewegt werden kann.

Um den Schleifkontakt 14 elektrisch zur elektrischen Energieübertragung mit dem elektrischen Verbraucher zu verbinden, ist eine hochflexible Schleifkontaktleitung 33 einerends elektrisch leitend mit dem Schleifkontakt 14 verbunden, und anderenends an einer Befestigungsschraube 34 an der Tragplatte 10 befestigt. Ebenfalls durch die Befestigungsschraube 34 an der Tragplatte 34 befestigt ist eine Verbindungsleitung 35 zum elektrischen Verbraucher, welche mit der Schleifkontaktleitung 34 elektrisch verbunden ist, beispielsweise durch die in den Zeichnungen gezeigten, an sich bekannten Kabelschuhe. Der Fachmann wird auch andere Möglichkeiten der Befestigung finden.

Anstatt den Schleifkontakt 14 direkt an der Gelenkhebelanordnung 18, 19 anzulenken, kann der Schleifkontakt 14 bevorzugt auch in einem elektrisch isolierenden Schleifkontakthalter angeordnet werden, der dann anstelle des Schleifkontakts 14 um die Drehachsen D5, D6 an den Gelenkhebelanordnungen 18, 19 drehbar angelenkt ist.

Wie in Fig. 2 und 3 erkennbar, weist die Schleifleitung 101 zum Einfahren des Schleifkontakts 14 in das Leitungsprofil 102 eine Einfahrhilfe 103 auf. Hierzu fährt der Stromabnehmer 1 von der in Fig. 2 gezeigten Stellung zunächst in Längsrichtung L an einer ebenfalls in Längsrichtung L verlaufenden Anschlagplatte 105 der Schleifleitung 101 in Richtung der Einfahrhilfe 103. Dabei wird der Schleifkontakt 14 durch die Federanordnung 25 in seiner ausgefahren Ruhestellung gehalten, in der der Schleifkontakt 14 und insbesondere die Schleifkontaktfläche 15 in bzw. parallel zur Längsrichtung L verlaufen. Um ein Aufkanten des Schleifkontakts 14 beim Anfahren an die Einfahrrampe 104 zu verhindern und das Einfahren zu erleichtern, sind die in Längsrichtung L liegenden Enden des Schleifkontakts 14 von seiner Mitte zu den Enden hin nach oben abgeschrägt.

Um ein Ausweichen des Schleifkontakts 14 in Zustellrichtung Z auf die Befestigungsplatte 4 hin und von der Schleifleitung 101 weg zu erleichtern, weist die Tragplatte 10 einen zwischen den beiden Anlenkungspunkten der Gelenkhebel 20 und 22 um die Drehachsen D1 und D2 verlaufenden Rücksprung 32 auf. Der Schleifkontakt 14 oder seine Enden, wie in Fig. 3 an dem linken Ende gezeigt, kann dann ohne an der Tragplatte 10 anzustoßen, in den Rücksprung 32 ausweichen.

Das vorliegend beschriebene Ausführungsbeispiel ermöglicht vorteilhaft einen flachen und kompakten Aufbau des Stromabnehmers 1, auch durch die in Längsrichtung L oder mit einem geringen Winkelabstand von bis zu 45°, bevorzugt bis zu 20° verlaufenden Rückstellfedern 26, 27 und die Gelenkhebelanordnungen 18, 19. Die zweiseitige Befestigung des Schleifkontakts 14 verringert zudem die Schwingungsanfälligkeit des Stromabnehmers 1 und sorgt für einen stabileren und gleichmäßigeren Lauf des Schleifkontakts 14 in dem Leitungsprofil 102. Auch ist der Stromabnehmer 1 insbesondere beim Einfahren in das Leitungsprofil 102 stabiler und weniger anfällig für ein Verkannten o.ä.

### Bezugszeichenliste

- 1: Stromabnehmer
- 2: elektrischer Verbraucher
- 3: Befestigungsrahmen
- 4: Befestigungsplatte
- 5: Halteplatte
- 6, 7: Halteschenkel
- 8, 9: Einsteckschlitze
- 10, 11: Tragplatten
- 12, 13: Schleifkontaktanordnungen
- 14: Schleifkontakt
- 15: Schleifkontaktfläche
- 16, 17: Befestigungsbereiche
- 18, 19: Gelenkhebelanordnungen
- 20, 21: Gelenkhebel
- 22, 23: Hebelarme
- 24: Rückstellvorrichtung
- 25: Federanordnung
- 26, 27: Rückstellfedern
- 28, 28', 29, 29': Federösen
- 30, 31: Haltedorne für Rückstellfedern
- 32: Rücksprung
- 33: Schleifkontaktleitung
- 34: Befestigungsschraube
- 35: Verbindungsleitung zum Verbraucher

- 100: Schleifleitungssystem
- 101: Schleifleitung
- 102: Leitungsprofil
- 103: Einfahrhilfe
- 104: Einfahrrampe
- 105: Anschlagplatte
- D1, D2: Drehachsen Gelenkhebel an der Tragplatte
- D3, D4: Drehachsen Hebelarm am Gelenkhebel
- D5, D6: Drehachsen Hebelarm am Schleifkontakt
- D7, D8: Drehachsen Hebelarm an Rückstellfeder
- E: Zustellebene
- L: Längsrichtung Schleifleitung, Längsrichtung Stromabnehmer
- Q: Querrichtung
- Z: Zustellrichtung Schleifkontakt

## Patentansprüche

1. Stromabnehmer (1) zur elektrischen Versorgung eines längs einer Schleifleitung (101) bewegbaren elektrischen Verbrauchers (2), der Stromabnehmer (1) weist ein Befestigungselement (3) und mindestens einen Schleifkontakt (14) mit einer in eine Längsrichtung (L) verlaufenden länglichen Schleifkontaktfläche (15) zur schleifenden Kontaktierung mit einem in Längsrichtung (L) verlaufenden elektrisch leitenden Leitungsprofil (102) der Schleifleitung (101) auf, wobei der Schleifkontakt (14) an in Längsrichtung (L) voneinander beabstandeten Befestigungsbereichen (16, 17) mittels zweier Gelenkhebelanordnungen (18, 19) in einer parallel zur Längsrichtung (L) verlaufenden Zustellebene (E) beweglich an dem Befestigungselement (3) angelenkt ist, **dadurch gekennzeichnet, dass** eine einerseits an den Gelenkhebelanordnungen (18, 19) und andererseits an dem Befestigungselement (3) angreifende Rückstellvorrichtung (24) vorgesehen ist, welche ausgebildet ist, den Schleifkontakt (14) bei einer Auslenkung aus einer Ruhestellung, in der die Schleifkontaktfläche (15) im wesentlichen parallel zur Längsrichtung (L) verläuft, in die Ruhestellung zurückzubewegen, wobei jede der Gelenkhebelanordnungen (18, 19) jeweils einen an dem Befestigungselement (3) drehbar angelenkten Gelenkhebel (20, 21) und einen einerseits drehbar an dem Gelenkhebel (20, 21) und andererseits drehbar an dem Schleifkontakt (14) angeordneten Hebelarm (22, 23) aufweist, wobei die Rückstellvorrichtung (24) eine elastische Zug-Druck-Anordnung (25) mit einem ersten Zug-Druck-Bereich und einem zweiten Zug-Druck-Bereich aufweist, wobei der erste Zug-Druck-Bereich einerseits mit dem Hebelarm (22) der ersten Gelenkhebelanordnungen (18) und andererseits mit dem Befestigungselement (3) verbunden ist, und der zweite Zug-Druck-Bereich einerseits mit dem Hebelarm (22) der zweiten Gelenkhebelanordnungen (18) und andererseits mit dem Befestigungselement (3) verbunden ist, und wobei
a) die Hebelarme (22, 23) in Form eines Winkelhebels ausgebildet sind, und/oder
b) die Rückstellvorrichtung (24) die zwei Hebelarme (22, 23) elastisch, insbesondere federelastisch mit dem Befestigungselement (3) verbindet.

2. Stromabnehmer (1) nach Anspruch 1, **dadurch gekennzeichnet, dass** die Zug-Druck-Anordnung (25) ein erstes Zug-Druck-Element (26) zur Ausbildung des ersten Zug-Druck-Bereichs und ein davon getrenntes zweites Zug-Druck-Element (27) zur Ausbildung des zweiten Zug-Druck-Bereichs aufweist.

3. Stromabnehmer (1) nach Anspruch 1, **dadurch gekennzeichnet, dass** die Zug-Druck-Anordnung (25) ein einzelnes Zug-Druck-Element aufweist, welches zur Ausbildung des ersten Zug-Druck-Bereichs und des zweiten Zug-Druck-Bereichs zwischen den beiden Zug-Druck-Bereichen an dem Befestigungselement angeordnet ist.

4. Stromabnehmer (1) nach Anspruch 1, 2 oder 3, **dadurch gekennzeichnet, dass** der erste Zug-Druck-Bereich (26) und/oder der zweite Zug-Druck-Bereich (27) parallel zur Längsrichtung (L) ausgerichtet sind.

5. Stromabnehmer (1) nach Anspruch 1, 2 oder 3, **dadurch gekennzeichnet, dass** der erste Zug-Druck-Bereich (26) und/oder der zweite Zug-Druck-Bereich (27) in einem Winkelabstand zur Längsrichtung, bevorzugt von maximal 45°, besonders bevorzugt von maximal 15° zur Längsrichtung (L) ausgerichtet sind.

6. Stromabnehmer (1) nach einem der Ansprüche 1 bis 5, **dadurch gekennzeichnet, dass** die Zug-Druck-Anordnung (25) eine Federanordnung und der erste Zug-Druck-Bereich ein erster Federbereich (26) und der zweite Zug-Druck-Bereich ein zweiter Federbereich (27) ist.

7. Stromabnehmer (1) nach einem der voranstehenden Ansprüche, **dadurch gekennzeichnet, dass** die Rückstellvorrichtung (24) ein Dämpfungselement aufweist.

8. Stromabnehmer (1) nach einem der voranstehenden Ansprüche, **dadurch gekennzeichnet, dass** eine oder mehrere Drehachsen (D1-D8), um welche Teile der Gelenkhebelanordnung (20, 21, 22, 23) drehbar sind, senkrecht auf der Zustellebene (E) stehen.

9. Stromabnehmer (1) nach einem der voranstehenden Ansprüche, **dadurch gekennzeichnet, dass** eine oder mehrere Drehachsen (D1-D8), um welche Teile der Gelenkhebelanordnung (20, 21, 22, 23) drehbar sind, gegenüber einem Lot auf die Zustellebene (E) geneigt sind, bevorzugt um einen Winkelabstand zum Lot von maximal 20°, besonders bevorzugt von maximal 5°.

10. Stromabnehmer (1) nach einem der voranstehenden Ansprüche, **dadurch gekennzeichnet, dass** die Zustellebene (E) durch die Längsrichtung (L) und eine senkrecht zur Längsrichtung (L) verlaufende Zustellrichtung (Z) des Schleifkontakts (14) von und zu der Schleifleitung (101) aufgespannt ist.

11. Stromabnehmer (1) nach einem der voranstehenden Ansprüche, **dadurch gekennzeichnet, dass** der Schleifkontakt (14) elektrisch isoliert am Stromabnehmer (1) angeordnet ist.

12. Schleifleitungssystem (100) mit einer in eine Längsrichtung (L) verlaufenden Schleifleitung (101) und einem Stromabnehmer (1) nach einem der Ansprüche 1 bis 11 zur elektrischen Versorgung eines längs der Schleifleitung (101) bewegbaren elektrischen Verbrauchers (2).

## Claims

1. A current collector (1) for electrically supplying an electrical load (2) which is movable along a conductor line (101), with the current collector (1) having a fastening element (3) and at least one sliding contact (14) with an elongate sliding contact surface (15), which extends in a longitudinal direction (L), for making sliding contact with an electrically conducting line profile (102) of the conductor line (101) which extends in a longitudinal direction (L), wherein the sliding contact (14) is articulated on the fastening element (3) at fastening regions (16, 17) spaced apart from one another in the longitudinal direction (L) so as to be movable in a feed plane (E) extending parallel to the longitudinal direction (L) by means of two articulated lever arrangements (18, 19), **characterized in that** a reset device (24) acting on the articulated lever arrangements (18, 19), on the one hand, and on the fastening element (3), on the other hand, is provided, which reset device is configured to move the sliding contact (14) back into an inoperative position when the sliding contact is deflected from the inoperative position in which the sliding contact surface (15) extends substantially parallel to the longitudinal direction (L), wherein each of the articulated lever arrangements (18, 19) has an articulated lever (20, 21), which is rotatably articulated to the fastening element (3), and a lever arm (22, 23) which is rotatably arranged on the articulated lever (20, 21), on the one hand, and rotatably arranged on the sliding contact (14), on the other hand, wherein the reset device (24) comprises an elastic tension-compression-arrangement (25) with a first tension-compression-region and a second tension-compression-region, with the first tension-compression-region being connected to the lever arm (22) of the first articulated lever arrangements (18), on the one hand, and to the fastening element (3), on the other hand, and with the second tension-compression-region being connected to the lever arm (22) of the second articulated lever arrangements (18), on the one hand, and to the fastening element (3), on the other hand, and wherein
a) the lever arms (22, 23) are configured in the form of an angled lever, and/or
b) the reset device (24) connects the two lever arms (22, 23) elastically, especially spring-elastically, to the fastening element (3).

2. The current collector (1) corresponding to claim 1, **characterized in that** the tension-compression-arrangement (25) comprises a first tension-compression-element (26) for creating the first tension-compression-region and a spaced-apart second separate tension-compression-element (27) for creating the second tension-compression-region.

3. The current collector (1) corresponding to claim 1, **characterized in that** the tension-compression-arrangement (25) has a single tension-compression-element which is arranged between the two tension-compression-regions on the fastening element so as to create the first tension-compression-region and the second tension-compression-region.

4. The current collector (1) corresponding to claim 1, 2 or 3, **characterized in that** the first tension-compression-region (26) and/or the second tension-compression-region (27) are aligned parallel to the longitudinal direction (L).

5. The current collector (1) corresponding to claim 1, 2 or 3, **characterized in that** the first tension-compression-region (26) and/or the second tension-compression-region (27) are aligned relative to the longitudinal direction, preferably at a maximum angle of 45°, and more preferably at a maximum angle of 15° relative to the longitudinal direction (L).

6. The current collector (1) corresponding to one of claims 1 to 5, **characterized in that** the tension-compression-arrangement (25) is a spring arrangement, and the first tension-compression-region is a first spring region (26), and the second tension-compression-region is a second spring region (27).

7. The current collector (1) corresponding to one of the preceding claims, **characterized in that** the reset device (24) comprises a damping element.

8. The current collector (1) corresponding to one of the preceding claims, **characterized in that** one or a plurality of axes of rotation (D1-D8), around which parts of the articulated lever arrangement (20, 21, 22, 23) can rotate, are disposed perpendicular to the feed plane (E).

9. The current collector (1) corresponding to one of the preceding claims, **characterized in that** one or a plurality of axes of rotation (D1-D8), around which parts of the articulated lever arrangement (20, 21, 22, 23) can rotate, are inclined relative to a perpendicular to the feed plane (E), preferably by a maximum angle of 20°, more preferably by a maximum angle of 5°, relative to the perpendicular.

10. The current collector (1) corresponding to one of the preceding claims, **characterized in that** the feed plane (E) is generated by the longitudinal direction (L) and a feed direction (Z) of the sliding contact (14) from and to the conductor line (101), the feed direction (Z) extending perpendicular to the longitudinal direction (L).

11. The current collector (1) corresponding to one of the preceding claims, **characterized in that** the sliding contact (14) is arranged on the current collector (1) in an electrically insulated manner.

12. A conductor line system (100) having a conductor line (101) extending in a longitudinal direction (L) and a current collector (1) according to one of claims 1 to 11 for electrically supplying an electrical load (2) which is movable along the conductor line (101).

## Revendications

1. Collecteur de courant (1) pour l'alimentation électrique d'un consommateur électrique (2) mobile le long d'une ligne de contact (101), le collecteur de courant (1) présente un élément de fixation (3) et au moins un contact glissant (14) avec une surface de contact glissant (15) allongée s'étendant dans une direction longitudinale (L) pour la mise en contact glissante avec un profil de ligne électroconducteur (102) de la ligne de contact (101) s'étendant dans la direction longitudinale (L), dans lequel le contact glissant (14) est articulé de manière mobile sur l'élément de fixation (3) sur des zones de fixation (16, 17) espacées les unes des autres dans la direction longitudinale (L) au moyen de deux ensembles de leviers articulés (18, 19) dans un plan d'avance (E) s'étendant parallèlement à la direction longitudinale (L), **caractérisé en ce que**
un dispositif de rappel (24) agissant d'une part sur les ensembles de leviers articulés (18, 19) et d'autre part sur l'élément de fixation (3) est prévu, lequel est réalisé pour replacer le contact glissant (14) lors d'une déviation à partir d'une position de repos, dans laquelle la surface de contact glissant (15) s'étend sensiblement parallèlement à la direction longitudinale (L), dans la position de repos, dans lequel
chacun des ensembles de leviers articulés (18, 19) présente respectivement un levier articulé (20, 21) articulé de manière rotative sur l'élément de fixation (3) et un bras de levier (22, 23) disposé d'une part de manière rotative sur le levier articulé (20, 21) et d'autre part de manière rotative sur le contact glissant (14), dans lequel le dispositif de rappel (24) présente un ensemble de traction-compression élastique (25) avec une première zone de traction-compression et une deuxième zone de traction-compression, dans lequel la première zone de traction-compression est reliée d'une part au bras de levier (22) des premiers ensembles de leviers articulés (18) et d'autre part à l'élément de fixation (3), et la deuxième zone de traction-compression est reliée d'une part au bras de levier (22) des deuxièmes ensembles de leviers articulés (18) et d'autre part à l'élément de fixation (3), et dans lequel
a) les bras de levier (22, 23) sont réalisés sous forme d'un levier coudé, et/ou
b) le dispositif de rappel (24) relie les deux bras de levier (22, 23), à l'élément de fixation (3) de manière élastique, en particulier de manière élastique à ressort.

2. Collecteur de courant (1) selon la revendication 1, **caractérisé en ce que** l'ensemble de traction-compression (25) présente un premier élément de traction-compression (26) pour la réalisation de la première zone de traction-compression et un deuxième élément de traction-compression (27) séparé de celui-ci pour la réalisation de la deuxième zone de traction-compression.

3. Collecteur de courant (1) selon la revendication 1, **caractérisé en ce que** l'ensemble de traction-compression (25) présente un élément de traction-compression individuel, lequel pour la réalisation de la première zone de traction-compression et de la deuxième zone de traction-compression est disposé entre les deux zones de traction-compression sur l'élément de fixation.

4. Collecteur de courant (1) selon la revendication 1, 2 ou 3, **caractérisé en ce que** la première zone de traction-compression (26) et/ou la deuxième zone de traction-compression (27) sont orientées parallèlement à la direction longitudinale (L) .

5. Collecteur de courant (1) selon la revendication 1, 2 ou 3, **caractérisé en ce que** la première zone de traction-compression (26) et/ou la deuxième zone de traction-compression (27) sont orientées à une distance angulaire par rapport à la direction longitudinale, de préférence au maximum de 45°, de manière particulièrement préférée au maximum de 15° par rapport à la direction longitudinale (L).

6. Collecteur de courant (1) selon l'une quelconque des revendications 1 à 5, **caractérisé en ce que** l'ensemble de traction-compression (25) est un ensemble à ressort et la première zone de traction-compression est une première zone à ressort (26) et la deuxième zone de traction-compression une deuxième zone à ressort (27).

7. Collecteur de courant (1) selon l'une quelconque des revendications précédentes, **caractérisé en ce que** le dispositif de rappel (24) présente un élément d'amortissement.

8. Collecteur de courant (1) selon l'une quelconque des revendications précédentes, **caractérisé en ce qu'**un ou plusieurs axes de rotation (D1-D8), autour desquels des parties de l'ensemble de leviers articulés (20, 21, 22, 23) peuvent tourner, sont perpendiculaires au plan d'avance (E).

9. Collecteur de courant (1) selon l'une quelconque des revendications précédentes, **caractérisé en ce qu'**un ou plusieurs axes de rotation (D1-D8), autour desquels des parties de l'ensemble de leviers articulés (20, 21, 22, 23) peuvent tourner, sont inclinés par rapport à une perpendiculaire au plan d'avance (E), de préférence d'une distance angulaire par rapport à la perpendiculaire de maximum 20°, de manière particulièrement préférée de maximum 5°.

10. Collecteur de courant (1) selon l'une quelconque des revendications précédentes, **caractérisé en ce que** le plan d'avance (E) est tendu par la direction longitudinale (L) et une direction d'avance (Z) du contact glissant (14) s'étendant perpendiculairement à la direction longitudinale (L) à partir de et vers la ligne de contact (101).

11. Collecteur de courant (1) selon l'une quelconque des revendications précédentes, **caractérisé en ce que** le contact glissant (14) est disposé sur le collecteur de courant (1) de manière électriquement isolée.

12. Système de ligne de contact (100) avec une ligne de contact (101) s'étendant dans une direction longitudinale (L) et un collecteur de courant (1) selon l'une quelconque des revendications 1 à 11 pour l'alimentation électrique d'un consommateur électrique (2) mobile le long de la ligne de contact (101) .
